# EUROPEAN PATENT APPLICATION

(11) **EP 4 191 701 A1**
(43) Date of publication of application: **07.06.2023**
(21) Application number: 21850915.6
(22) Date of filing: 24.06.2021
(51) Int. Cl.: H01M 4/131, H01M 4/505, H01M 4/525, H01M 4/62

(54) **SECONDARY-BATTERY POSITIVE ELECTRODE**

(30) Priority: 31.07.2020 JP 2020129944
(71) Applicant: Panasonic Intellectual Property Management Co., Ltd., Osaka-shi, Osaka 540-6207 (JP)
(72) Inventor: ASAKA Keisuke, Osaka 540-6207 (JP); SAKATA Motohiro, Osaka 540-6207 (JP)
(74) Representative: Novagraaf International SA
(86) International application number: PCT/JP2021/023892
(87) International publication number: WO 2022/024605

(57) **Abstract**

The positive electrode for a secondary battery includes a positive electrode mixture layer including a positive electrode active material and a conductive material; the positive electrode active material includes a lithium transition metal composite oxide including at least Ni; and the conductive material includes a carbon fiber having an average fiber diameter d of 5 µm or more and 30 µm or less, and an average fiber length L of 50 µm or more and 2000 µm or less.

## Description

### [Technical Field]

The present disclosure relates to a positive electrode for a secondary battery.

### [Background Art]

Secondary batteries, particularly lithium ion secondary batteries, are expected as a power source for small consumer applications, electric tools, electric vehicles, and hybrid vehicles because of their high output and high energy density. For positive electrode active materials of lithium ion secondary batteries, a composite oxide of lithium and a transition metal (e.g., cobalt) is used. Replacing at least a portion of cobalt with nickel allows for a high capacity.

Secondary batteries used for a power source for electric tools and hybrid vehicles are required to have particularly excellent input-output characteristics. To improve input-output characteristics, conductivity of positive electrodes has to be improved. For the improvement, sufficient conductive paths have to be secured inside the positive electrode mixture layer. Conventionally, attempts have been made to improve the positive electrode conductivity by including carbon nanotubes in the positive electrode mixture layer.

For example, Patent Literature 1 has proposed a positive electrode for a lithium ion secondary battery, the positive electrode having a positive electrode mixture layer provided on a positive electrode current collector, the positive electrode mixture layer including a positive electrode active material, a conductive material, and a binder, the conductive material containing at least carbon nanotubes, and the binder being an acrylic binder.

### [Citation List]

### [Patent Literature]

PLT1: Japanese Laid-Open Patent Publication No.2014-238944

### [Summary of Invention]

To improve the positive electrode conductivity with carbon nanotubes (CNT), CNTs have to be sufficiently dispersed inside the positive electrode mixture layer, and the CNTs have to be bound with the positive electrode active material. However, CNTs have a nanometer-order fiber diameter, and tend to entangle with each other easily to form aggregate. Therefore, it is not easy to increase the dispersiveness of CNTs inside the positive electrode mixture layer, and improvement in the positive electrode conductivity is limited.

An aspect of the present disclosure relates to a positive electrode for a secondary battery including a positive electrode mixture layer including a positive electrode active material and a conductive material, wherein the positive electrode active material includes a lithium transition metal composite oxide including at least Ni, and the conductive material includes a carbon fiber having an average fiber diameter d of 5 µm or more and 30 µm or less, and an average fiber length L of 50 µm or more and 2000 µm or less.

The present disclosure allows for an increase in the positive electrode conductivity, and therefore a secondary battery with excellent input-output characteristics can be achieved.

### [Brief Description of Drawings]

[FIG. 1] FIG.1 is a partially cut-away plan view schematically illustrating the structure of a secondary battery of an embodiment of the present disclosure.
[FIG.2] FIG.2 is a cross sectional view along line X-X' of the non-aqueous secondary battery shown in FIG. 1.

### [Description of Embodiments]

A positive electrode for a secondary battery in an embodiment of the present disclosure has a positive electrode mixture layer including a positive electrode active material and a conductive material. The positive electrode mixture layer is a positive electrode mixture formed into a layer, the positive electrode mixture being a mixture containing a positive electrode active material and a conductive material as essential components. The positive electrode mixture layer is formed, for example, on a sheet type positive electrode current collector surface.

The positive electrode active material includes a lithium transition metal composite oxide including at least Ni (hereinafter, also referred to as composite oxide A). The composite oxide A has, for example, a layered rock salt-type crystal structure. Lithium is released from the composite oxide A during charging of the secondary battery, and stored in the composite oxide A during discharging. The composite oxide A containing Ni has a high energy density. The positive electrode active material may include a lithium transition metal composite oxide (e.g., LiCoO₂) other than the composite oxide A, but preferably 50 mass% or more, more preferably 80 mass% or more of the positive electrode active material is the composite oxide A.

The composite oxide A has a Ni content of, for example, 20 mol % (atom %) or more, or may be 30 mol % or more relative to a total of the metal elements other than lithium contained in the composite oxide A. Meanwhile, in view of stabilizing the crystal structure and maintaining a low resistance and excellent output-input characteristics for a long period of time, the above-described Ni content may be 95 mol % or less, 80 mol % or less, or 50 mol % or less.

The composite oxide A preferably further contains Co. Co works to improve thermal stability of the composite oxide A without damaging the high energy density of the composite oxide A containing Ni. The Co content of the composite oxide A is, for example, 50 mol % (atom %) or less, more preferably 40 mol % or less relative to a total of the metal elements other than lithium contained in the composite oxide A. In view of sufficiently obtaining effects of improvement in conductivity by Co, the composite oxide A has a Co content of, for example, 20 mol % (atom %) or more, more preferably 30 mol % or more relative to a total of the metal elements other than lithium contained in the composite oxide A.

The composite oxide A may further include Mn. Similarly with Co, Mn also works to improve thermal stability of the composite oxide A without damaging the high energy density of the composite oxide A containing Ni. The composite oxide A has a Mn content of, for example, 50 mol % (atom %) or less, even more preferably 40 mol % or less relative to a total of the metal elements other than lithium contained in the composite oxide A. The Mn content in the composite oxide A is, for example, 15 mol % (atom %) or more, more preferably 20 mol % or more relative to a total of the metal elements other than lithium contained in the composite oxide A.

The composite oxide A may further include an element other than any of Li, Ni, Co, and Mn. Examples of such an element include Al, Fe, Ti, Si, Nb, Zr, Mo, and Zn. The composite oxide A may include one selected from these, or two or more selected from these.

The composite oxide A may be represented by, for example, a general formula: LiₐNiₓCo_{y}M_{z}O_{b}F_{c}. The above-described general formula satisfies 0.95 ≤ a ≤ 1.2, 0.2 ≤ x ≤ 0.95, 0 ≤ y ≤ 0.5, 0 ≤ z ≤ 0.5, x + y + z = 1, and b + c = 2. M is at least one selected from the group consisting of Mn, Al, Fe, Ti, Si, Nb, Zr, Mo, Sr, W, P, Ca, Mg, Sb, Na, B, V, Cr, Cu, Ge, Ru, K, Bi, and Zn. Specific examples thereof include LiNi_{0.35}Co_{0.35}Mn_{0.30}O₂, and LiNi_{0.9}Co_{0.05}Al_{0.05}O₂.

The amount of the elements contained in the positive electrode active material is measured, for example, by the following method. First, a completely discharged secondary battery is disassembled and the obtained positive electrode is washed with dimethyl carbonate (DMC). Then, the positive electrode mixture layer is separated from the positive electrode and weighed, and then immersed in an aqueous hydrochloric acid solution (1 + 1), and allowed to stand for 2 hours while heated to 90°C. Afterward, the undissolved binder and conductive material are filtrated. The filtrate is subjected to Inductively Coupled Plasma Atomic Emission Spectroscopy (ICP-AES), and the respective elements are quantitatively analyzed.

The conductive material includes a carbon fiber (hereinafter, referred to as carbon fiber A) having an average fiber diameter d of 5 µm or more and 30 µm or less, and an average fiber length L of 50 µm or more and 2000 µm or less. The carbon fiber A has a high average fiber diameter d and a high average fiber length L, and therefore has excellent conductivity and strength. By including the carbon fiber A in the positive electrode mixture layer, an excellent current collecting network is formed inside the positive electrode mixture layer. As a result, the DC-IR of the positive electrode is decreased, and the positive electrode conductivity is significantly improved. The excellent current collecting network allows for further amplification of the excellent output-input characteristics of the composite oxide A.

The average fiber diameter d may be 7 µm or more and 25 µm or less, or may be 9 µm or more and 20 µm or less. The average fiber length L may be 70 µm or more and 1500 µm or less, or may be 100 µm or more and 1000 µm or less. The carbon fiber A has an aspect ratio (L/d) of, for example, 5 or more.

The average fiber diameter d and the average fiber length L can be measured by, for example, the following method. First, a completely discharged secondary battery is disassembled and the obtained positive electrode is washed with dimethyl carbonate (DMC). Then, the positive electrode mixture layer is separated from the positive electrode, immersed in an aqueous hydrochloric acid solution (1 + 1), and allowed to stand for two hours while heated to 90°C. Afterward, the undissolved binder and conductive material are filtrated to separate the carbon fiber A. The fiber diameter and the fiber length are measured using arbitrarily selected 100 carbon fibers from the obtained carbon fiber A, and averaged.

The conductive material may include another carbon fiber (e.g., CNT) besides the carbon fiber A, but preferably 90 mass% or more is the carbon fiber A of all the carbon fibers.

Use of the positive electrode of the present disclosure allows for obtaining a secondary battery having excellent input-output characteristics. Such a secondary battery is useful for, for example, a power source for hybrid vehicles and electric tools. Among these, it is important that a power source for hybrid vehicles has to have a low resistance and can exhibit excellent output-input characteristics when necessary. Meanwhile, a power source for hybrid vehicles only has to work to partly assist in the energy necessary for driving a vehicle. In such use, including a sufficient amount of the conductive material in the positive electrode mixture layer will secure the necessary capacity.

The amount of the carbon fiber A included in the positive electrode mixture layer may be 7 mass% or less, 0.3 mass% or more and 7 mass% or less, 1.5 mass% or more and 5 mass% or less, or 1.0 mass% or more and 5 mass% or less. In this case, while decreasing the DC-IR of the positive electrode more effectively, a sufficient capacity can be ensured.

The carbon fiber A content of the positive electrode mixture layer can be measured, for example, by the following method. First, a completely discharged secondary battery is disassembled and the obtained positive electrode is washed with dimethyl carbonate (DMC). Then, the positive electrode mixture layer is separated from the positive electrode, and the weighed positive electrode mixture having a known mass is immersed in an aqueous hydrochloric acid solution (1 + 1), and allowed to stand for two hours while heated to 90°C. Afterward, the undissolved binder and conductive material are filtrated to separate the carbon fiber A. The obtained carbon fiber A was dried at 100°C for 12 hours, and the carbon fiber A content is calculated based on its mass and the mass of the positive electrode mixture used for the analysis.

The ratio of the average fiber length L of the carbon fiber A relative to the positive electrode mixture layer thickness T: L/T may be 2 or more and 50 or less, or 5 or more and 45 or less. By using the carbon fiber A having a sufficiently long length relative to the positive electrode mixture layer thickness T, the current collecting network connecting the positive electrode current collector with the positive electrode mixture layer becomes even stronger, and the DC-IR of the positive electrode is significantly decreased. The positive electrode mixture layer thickness T is a surface-to-surface distance of the positive electrode mixture layer, from its surface on the positive electrode current collector side (contact face with positive electrode current collector) to its surface on the negative electrode side. The thickness T can be determined by photographing the cross section of the positive electrode mixture layer along the thickness direction with a scanning electron microscope (SEM), measuring the distance from the surface of the positive electrode mixture layer on the positive electrode current collector side to the side facing the negative electrode at any 10 points in the cross section, and averaging the results.

The conductive material may further include carbon particles. By surrounding the positive electrode active material with the carbon particles, the conductive path between the positive electrode active material and the carbon fiber A increases. The carbon fiber A forms macro-scale conductive paths that electrically connect the positive electrode mixture layer with the positive electrode current collector. The carbon particles form micro-scale conductive paths branched from the macro-scale conductive paths. The micro-scale conductive paths are present between the positive electrode active material and the carbon fiber A, and electrically connect the positive electrode active material together.

Examples of the carbon particles to be the conductive material include carbon black, graphite, graphitizable carbon (soft carbon), and non-graphitizable carbon (hard carbon). Among them, carbon black is suitable for forming the conductive paths. Examples of the carbon black include acetylene black, Ketjen black, furnace black, and lamp black. These may be used singly or in combination of two or more. The carbon black primary particles have an average particle size of, for example, 5 nm or more and 500 nm or less. These average particle sizes can be determined as an average value of the maximum diameters of any 100 particles observed by SEM.

The positive electrode mixture layer may contain the carbon particles in an amount of 0.5 mass% or more and 15 mass% or less, or 5 mass% or more and 11 mass% or less. In this case, while decreasing the DC-IR of the positive electrode more effectively, a sufficient capacity can be ensured. The carbon particle content in the positive electrode mixture layer can be measured in accordance with the already described measurement for the carbon fiber A content.

A total amount of the carbon fiber A and the carbon particles included in the positive electrode mixture layer may be 1 mass% or more and 20 mass% or less, 3.3 mass% or more and 20 mass% or less, 4 mass% or more and 15 mass% or less, 5 mass% or more and 15 mass% or less, or 7 mass% or more and 12 mass% or less. In this case, while decreasing the DC-IR of the positive electrode more effectively, a sufficient capacity can be ensured.

In the positive electrode mixture layer, the ratio of the carbon fiber A relative to a total of the carbon fiber A and the carbon particles may be, for example, 5 mass% or more and 50 mass% or less, 20 mass% or more and 50 mass% or less, 20 mass% or more and 40 mass% or less. Within this range, an intricate current collecting network with excellent balance of macro-scale conductive paths and micro-scale conductive paths branched therefrom can be easily formed.

Output-input characteristics improve more with a small positive electrode mixture layer thickness. The positive electrode mixture layer thickness T may be, for example, 40 µm or less, or 30 µm or less. By controlling the positive electrode mixture layer thickness T to the above-described range, the transferring path of lithium ions becomes sufficiently short, and electrolyte easily moves within the positive electrode mixture layer. Therefore, excellent output-input characteristics can be easily achieved. In view of securing a sufficient capacity, the positive electrode mixture layer thickness T is preferably set to, for example, 5 µm or more, more preferably 10 µm or more.

The ratio of the average fiber diameter d of the carbon fiber A relative to the average particle size D of the positive electrode active material: d/D may be 0.5 or more and 5 or less, or 1 or more (or 2 or more) and 4 or less. In this case, the average fiber diameter d of the carbon fiber A is sufficiently large relative to the average particle size D of the positive electrode active material, and therefore the current collecting network becomes even stronger. As a result, the DC-IR of the positive electrode is decreased significantly even more. Meanwhile, because the average particle size D of the positive electrode active material is limited to relatively small, and therefore it is advantageous in improvement in output-input characteristics.

The positive electrode active material is generally in a form of secondary particles, i.e., coagulated primary particles. The average particle size D of the positive electrode active material may be, for example, 15 µm or less, 10 µm or less, or 6 µm or less. By controlling the average particle size D of the positive electrode active material to the above-described range, the surface area of the positive electrode active material increases, which is even more advantageous in improvement in output-input characteristics. In view of suppressing side reactions, the average particle size D of the positive electrode active material is preferably set to, for example, 1 µm or more, and even more preferably 2 µm or more.

The average particle size D of the positive electrode active material can be measured, for example, by the following method. First, a completely discharged secondary battery is disassembled and the obtained positive electrode is washed with dimethyl carbonate (DMC). Then, a cross section of the positive electrode mixture layer along the thickness direction is photographed with a scanning electron microscope (SEM), the maximum diameter of any 10 positive electrode active material particles observed in the cross section are measured, and averaged.

The positive electrode mixture layer has a density of, for example, 2 g/cm³ or more and 3.8 g/cm³ or less. By controlling the density of the positive electrode mixture layer in the above-described range, excellent output-input characteristics can be easily achieved. In view of obtaining even more excellent output-input characteristics, the above-described density is preferably set to sufficiently smaller than 3.8 g/cm³, preferably 3.0 g/cm³ or less, more preferably 2.6 g/cm³ or less.

The positive electrode mixture layer density (d) is calculated by, for example, cutting out a positive electrode piece having a predetermined size from the positive electrode, measuring the thickness (t) and area (S) of the positive electrode mixture layer of the positive electrode piece, measuring the mass (M) of the positive electrode mixture layer of the positive electrode piece, and calculating from the formula: d = M/(t × S).

In the following, a secondary battery in which the positive electrode of the present disclosure can be used is described. A secondary battery includes a positive electrode, a negative electrode, a non-aqueous electrolyte, and a separator.

### [Positive Electrode]

The positive electrode has a positive electrode current collector and a positive electrode mixture layer formed on the surface of the positive electrode current collector and having the above-described structure. The positive electrode mixture layer is formed, for example, by applying a positive electrode slurry, in which the positive electrode mixture is dispersed in a dispersion medium, on the surface of the positive electrode current collector; drying; and rolling the dried coating. The positive electrode mixture layer is formed on one side surface or both side surfaces of the positive electrode current collector.

The positive electrode mixture layer includes a positive electrode active material and a conductive material as essential components, and includes a binder and the like as optional components. The binder gives a binding force to the positive electrode active material itself, between the positive electrode active material and the conductive material, and between the positive electrode mixture and the positive electrode current collector. The positive electrode active material includes the composite oxide A as an essential component.

Examples of the binder used for the positive electrode mixture layer include known materials such as, for example, fluorine resin (polytetrafluoroethylene, polyvinylidene fluoride and the like), polyacrylonitrile (PAN), polyimide resin, acrylic resin, and polyolefin resin. These may be used singly or in combination of two or more.

For the positive electrode current collector, for example, a metal sheet or metal foil is used. Examples of the material for the positive electrode current collector include stainless steel, aluminum, aluminum alloy, titanium, or the like.

### [Negative Electrode]

The negative electrode has, for example, a negative electrode current collector, and a negative electrode active material layer (negative electrode mixture layer) formed on the surface of the negative electrode current collector. The negative electrode active material layer can be formed, for example, by applying a negative electrode slurry, in which a negative electrode mixture including the negative electrode active material, binder, and the like is dispersed in a dispersion medium, on the surface of the negative electrode current collector; drying; and rolling the dried coating. The negative electrode active material layer is formed on one side surface or both side surfaces of the negative electrode current collector. The negative electrode active material layer may be lithium metal foil or lithium alloy foil.

The negative electrode mixture layer contains a negative electrode active material as an essential component, and may contain a binder, a conductive material, a thickener, and the like as optional components. For the binder, conductive material, and thickener, known materials can be used.

Examples of the binder used for the negative electrode mixture layer include known materials such as, for example, fluorine resin (polytetrafluoroethylene, polyvinylidene fluoride and the like), polyacrylonitrile (PAN), rubber material (copolymer of styrene and butadiene and the like), polyimide resin, acrylic resin, and polyolefin resin. These may be used singly or in combination of two or more.

The negative electrode active material contains a material that electrochemically stores and releases lithium ions, a lithium metal, and a lithium alloy. For the material that electrochemically stores and releases lithium ions, a carbon material, an alloy, and the like are used. As the carbon material, graphite, graphitizable carbon, non-graphitizable carbon, and the like can be exemplified. Preferred among them is graphite, which is excellent in stability during charging and discharging and has a small irreversible capacity.

Here, the alloy based material refers to a material containing an element capable of forming an alloy with lithium. Silicon and tin are examples of the element capable of forming an alloy with lithium, and silicon (Si) is particularly promising.

For the negative electrode current collector, for example, a metal sheet or metal foil is used. For the material of the negative electrode current collector, stainless steel, nickel, nickel alloy, copper, copper alloy, or the like can be exemplified.

### [Non-aqueous electrolyte]

For the non-aqueous electrolyte, for example, an electrolyte including a non-aqueous solvent and a solute dissolved therein is used. The solute means an electrolytic salt that goes through ion dissociation in a non-aqueous solvent, and includes lithium salts. The non-aqueous electrolyte may include an additive other than the non-aqueous solvent and the solute.

As the non-aqueous solvent, a cyclic carbonate, a chain carbonate, a cyclic carboxylate, a chain carboxylate, and the like are exemplified. Examples of the cyclic carbonate include propylene carbonate (PC), ethylene carbonate (EC), and vinylene carbonate (VC). Examples of the chain carbonate include diethyl carbonate (DEC), ethyl methyl carbonate (EMC), and dimethyl carbonate (DMC). Examples of the cyclic carboxylate include γ-butyrolactone (GBL) and γ-valerolactone (GVL). Examples of the chain carboxylate include methyl acetate, ethyl acetate, propyl acetate, methyl propionate (MP), and ethyl propionate (EP). A kind of non-aqueous solvent may be used singly, or two or more kinds thereof may be used in combination. These solvents may be a fluorinated solvent in which part of the hydrogen atoms is substituted with a fluorine atom. Fluoro ethylene carbonate (FEC) may be used as the fluorinated solvent.

For the lithium salt, for example, lithium salts of chlorine-containing acid (LiClO₄, LiAlCl₄, LiB₁₀Cl₁₀, etc.), lithium salts of fluorine-containing acid (LiPF₆, LiPF₂O₂, LiBF₄, LiSbF₆, LiAsF₆, LiCF₃SO₃, LiCF₃CO₂, etc.), lithium salts of fluorine-containing acid imide (LiN (FSO₂)₂, LiN (CF₃SO₂)₂, LiN (CF₃SO₂)(C₄F₉SO₂), LiN (C₂F₅SO₂)₂, etc.), lithium halide (LiCl, LiBr, LiI, etc.), and the like can be used. A kind of lithium salt may be used singly, or two or more kinds thereof may be used in combination.

The electrolyte may have a lithium salt concentration of 1 mol/liter or more and 2 mol/liter or less, or 1 mol/liter or more and 1.5 mol/liter or less.

### [Separator]

A separator is interposed between the positive electrode and the negative electrode. The separator has ion permeability and insulating properties. For the separator, a microporous film, woven cloth, nonwoven cloth, and the like may be used. Preferably, the separator material is polyolefin.

The secondary battery has a structure in which an electrode group and a non-aqueous electrolyte are accommodated in an outer case. The electrode group is not particularly limited, and may be formed by winding the positive electrode and the negative electrode with the separator interposed therebetween, or by laminating the positive electrode and the negative electrode with the separator interposed therebetween. The secondary battery may be any shape, for example, a cylindrical type, a rectangular type, a coin-type, a button type, or a laminate type.

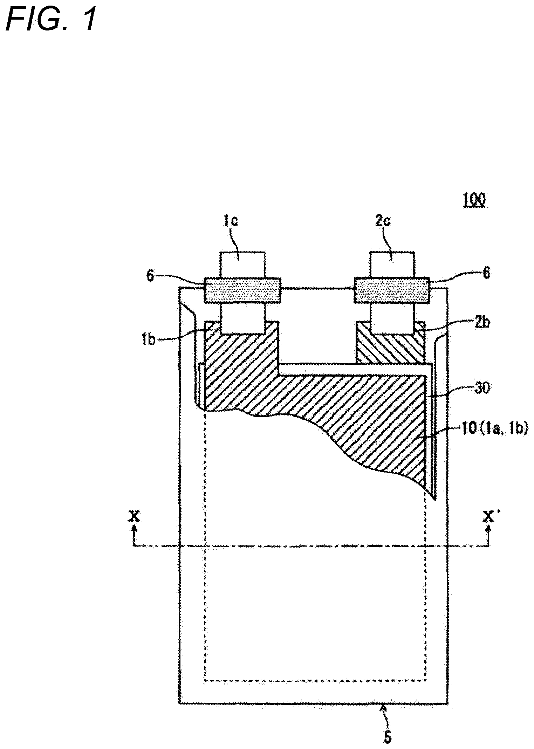

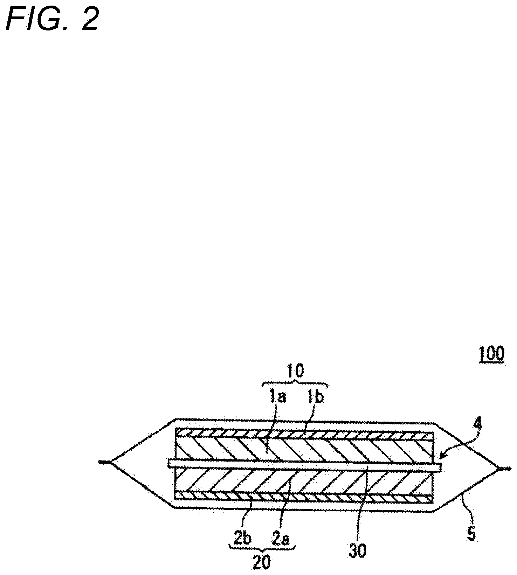

Referring to FIG. 1 and FIG.2, a non-aqueous electrolyte secondary battery of an embodiment of the present disclosure will be described below. FIG. 1 is a partially cut-away plan view schematically showing an exemplary non-aqueous electrolyte secondary battery structure. FIG.2 is a cross sectional view along line X-X' in FIG. 1.

As shown in FIG. 1 and FIG.2, a secondary battery 100 is a sheet type battery, and includes an electrode group 4 and an outer case 5 for accommodating the electrode group 4.

The electrode group 4 has a structure in which a negative electrode 10, a separator 30, and a positive electrode 20 are laminated in this order, and the negative electrode 10 faces the positive electrode 20 with the separator 30 interposed therebetween. The electrode group 4 is formed in this manner. The electrode group 4 is immersed in an electrolyte.

The negative electrode 10 includes a negative electrode active material layer 1a and a negative electrode current collector 1b. The negative electrode active material layer 1a is formed on the surface of the negative electrode current collector 1b.

The positive electrode 20 includes a positive electrode mixture layer 2a and a positive electrode current collector 2b. The positive electrode mixture layer 2a is formed on the surface of the positive electrode current collector 2b.

A negative electrode tab lead 1c is connected to the negative electrode current collector 1b, and a positive electrode tab lead 2c is connected to the positive electrode current collector 2b. The negative electrode tab lead 1c and positive electrode tab lead 2c each extends out of the outer case 5.

An insulating tab film 6 insulates the negative electrode tab lead 1c from the outer case 5, and the positive electrode tab lead 2c from the outer case 5.

In the following, the present disclosure will be described in detail based on Examples and Comparative Examples, but the present disclosure is not limited to Examples below.

### <Comparative Example 1>

### (1) Production of positive electrode

A positive electrode slurry was prepared by dispersing a positive electrode mixture in N-methyl-2-pyrrolidone (NMP), the positive electrode mixture containing 90.3 mass% of a positive electrode active material (LiNi_{0.35}Co_{0.35}Mn_{0.30}O₂ with average particle size D of 4 µm), 7 mass% of acetylene black as carbon particles (AB, average particle size of primary particles 50 nm), and 2.7 mass% of polyvinylidene fluoride as a binder. Then, the positive electrode slurry was applied on one side of a positive electrode current collector (aluminum foil), and the coating was dried and rolled with a roller, thereby producing a positive electrode having a positive electrode mixture layer with a thickness of 25 µm and a density of 2.4 g/cm³.

The positive electrode was cut into a predetermined shape to obtain a positive electrode for evaluation. The positive electrode was provided with a region of 40 mm × 30 mm functioning as a positive electrode and a region of 5 mm × 5 mm for connecting with the tab lead. The positive electrode mixture layer formed on the above-described connecting region was scraped off to expose the positive electrode current collector. Afterward, the exposed portion of the positive electrode current collector was connected to the positive electrode tab lead and a predetermined region of the outer periphery of the positive electrode tab lead was covered with an insulating tab film.

### (2) Production of negative electrode

A negative electrode slurry was prepared by dispersing a negative electrode mixture in water, the negative electrode mixture containing 99 mass% of a negative electrode active material (graphite with average particle size of 10 µm), 0.4 mass% of styrene-butadiene copolymer (SBR) as a binder, and 0.6 mass% of carboxymethyl cellulose (CMC) as a thickener. Then, the negative electrode slurry was applied on one side of a negative electrode current collector (electrolytic copper foil), and the coating was dried and rolled with a roller, thereby producing a negative electrode having a negative electrode mixture layer with a thickness of 60 µm and a density of 1.2 g/cm³.

The negative electrode was cut into the same form as the positive electrode, and a negative electrode for evaluation was obtained. The negative electrode mixture layer formed on the connecting region was scraped off in the same manner as the positive electrode to expose the negative electrode current collector. Afterward, the exposed portion of the negative electrode current collector was connected to the negative electrode tab lead and a predetermined region of the outer periphery of the negative electrode tab lead was covered with an insulating tab film.

### (3) Preparation of electrolyte

To a solvent mixture containing EC, EMC, DMC, and MP at a volume ratio of 25:37:35:3, LiPF₆ was dissolved at a concentration of 1 mol/L to prepare an electrolyte.

### (4) Preparation of cell for evaluation

Using the above-described positive electrode and negative electrode for evaluation, a cell was produced. First, the positive electrode and negative electrode were allowed to face each other with a polypropylene made separator (thickness 30 µm) so that the positive electrode mixture layer overlaps with the negative electrode mixture layer, thereby producing an electrode group. Next, an Al laminate film (thickness 100 µm) cut into a rectangle of 60 × 90 mm was folded in half, and a long side end of 60 mm was heat-sealed at 230°C to form an envelope of 60 × 45 mm. Afterward, the fabricated electrode group was put into the envelope, and heat-sealing at 230°C was performed, aligning the position of the thermal welding resin of respective tab leads with the end face of the Al laminate film. Then, 0.7 cm³ of the non-aqueous electrolyte was injected from a not-heat-sealed short side of the Al laminate film, and afterward allowed to stand under a reduced pressure of 0.06 MPa for 5 minutes, thereby immersing the positive electrode mixture layer in the electrolyte. Finally, the end face of the injected side of the Al laminate film was heat-sealed at 230°C to obtain a cell C1 for evaluation. The evaluation cell was prepared in a dry air atmosphere having a dew point of -50°C or less.

### (5) DC-IR evaluation on batteries

The evaluation cell was sandwiched with a clamp between a pair of 80 × 80 cm stainless steel (thickness 2 mm) plates and fixed under pressure with 0.2 MPa.

First, in a thermostatic chamber at 25°C, a cycle of charging and discharging was performed 5 times at a constant current of 0.05 C (1 C being an electric current to discharge the designed capacity by 1 hour). Charging was terminated at a battery voltage of 4.15 V, and discharging was terminated at a battery voltage of 2.5 V, respectively, and the batteries were allowed to stand for 20 minutes with an open circuit between the charging and discharging. Based on the discharge curve at the 5th cycle, a voltage V₅₀, i.e., a voltage at 50% discharged state, was calculated.

Then, charging was performed in a thermostatic chamber of 25°C at a constant current of 0.05 C until the voltage of V₅₀, and thereafter, the constant voltage of V₅₀ was kept until the current reached below 0.02 C. Afterward, they were allowed to stand for 20 minutes with an open circuit, and then discharged for 30 seconds at a constant current of 1 C in a thermostatic chamber of 25°C, and a voltage at the point of 10 second was determined. After the discharging of 30 seconds, charging was performed to the extent of the electricity equivalent to the discharging at a constant current of 0.05 C. The voltage at the point of 10 second was determined in the same manner, setting the discharging electric current value to 2C, 3C, 4C, 5C, 10C, 15C, 20C, 25C, 30C, and 36C. The DC-IR was determined based on the inclination of the linear approximation representing the relation between the electric current value I and the voltage V at the point of 10 second.

### <Example 1>

An evaluation cell A1 was produced in the same manner as in Comparative Example 1, except that in production of the positive electrode, a positive electrode mixture containing 87.4 mass% of the positive electrode active material, 7 mass% of acetylene black (AB), 2.6 mass% of polyvinylidene fluoride, and 3 mass% of carbon fiber (CF) A1 having an average fiber diameter d and an average fiber length L shown in Table 1 was used. In this Example, L/T = 8 and d/D = 3.63 are satisfied. The ratio of the carbon fiber A1 relative to a total of the carbon fiber A1 and the carbon particles was 30 mass%.

### <Example 2>

An evaluation cell A2 was produced in the same manner as in Comparative Example 1, except that in production of the positive electrode, a positive electrode mixture containing 85.45 mass% of the positive electrode active material, 7 mass% of acetylene black, 2.55 mass% of polyvinylidene fluoride, 5 mass% of the carbon fiber A2 having the average fiber diameter d and the average fiber length L shown in Table 1 was used. In this Example, L/T = 40 and d/D = 3.63 are satisfied. The ratio of the carbon fiber A2 relative to a total of the carbon fiber A2 and the carbon particles was 41.7 mass%.

### <Comparative Example 2>

An evaluation cell C2 was produced in the same manner as in Comparative Example 1, except that in production of the positive electrode, a positive electrode mixture containing 85.45 mass% of the positive electrode active material, 12 mass% of acetylene black, and 2.55 mass% of polyvinylidene fluoride was used.

### <Comparative Example 3>

An evaluation cell C3 was produced in the same manner as in Comparative Example 1, except that in production of the positive electrode, a positive electrode mixture containing 90.06 mass% of the positive electrode active material, 7 mass% of acetylene black, 2.69 mass% of polyvinylidene fluoride, and 0.25 mass% of the carbon fiber a3 having the average fiber diameter d and the average fiber length L shown in Table 1 was used.

The results are shown in Table 1. The DC-IR is shown in a relative value setting the value for Comparative Example 1 as 100. A smaller value means a small DC-IR, with excellent positive electrode conductivity and output-input characteristics.

**[Table 1]**

| Cell | AB Content (mass%) | CF Content (mass%) | Average Fiber Length L (µm) | Average Fiber Diameter d (µm) | DC-IR |
|---|---|---|---|---|---|
| C1 | 7 | 0 | - | - | 100 |
| A1 | 7 | 3 | 200 | 14.5 | 86.7 |
| A2 | 7 | 5 | 1000 | 14.5 | 91.5 |
| C2 | 12 | 0 | - | - | 95.3 |
| C3 | 7 | 0.25 | 5 | 0.002 | 92.9 |

As shown in Table 1, the cells A1 and A2 using the positive electrode mixture containing the carbon fiber A showed significant decrease in DC-IR. Meanwhile, the cell C2 having the same conductive material content but using no carbon fiber A showed insufficient decrease in DC-IR. The cell C3 in which CNT was used instead of the carbon fiber A, the DC-IR decreased to a certain extent, but not as much as the case with the carbon fiber A. CNTs are bulky and easily coagulated, and therefore it takes a long time to be dispersed in the positive electrode slurry, and it was difficult to include 0.25 mass% or more in the positive electrode slurry.

### [Industrial Applicability]

The positive electrode for a secondary battery of the present disclosure is suitably used for a power source of, for example, hybrid vehicles (HEV) and plug-in hybrid vehicles (PHV).

### [Reference Signs List]

1a Negative Electrode Active Material Layer
1b Negative Electrode Current Collector
1c Negative electrode Tab Lead
2a Positive Electrode Mixture Layer
2b Positive Electrode Current Collector
2c Positive Electrode Tab Lead
4 Electrode Group
5 Outer Case
6 Insulating tab film
10 Negative Electrode
20 Positive Electrode
30 Separator
100 Lithium ion Secondary Battery

## Claims

1. A positive electrode for a secondary battery comprising a positive electrode mixture layer including a positive electrode active material and a conductive material, wherein
the positive electrode active material includes a lithium transition metal composite oxide including at least Ni, and
the conductive material includes a carbon fiber having an average fiber diameter d of 5 µm or more and 30 µm or less, and an average fiber length L of 50 µm or more and 2000 µm or less.

2. The positive electrode for a secondary battery of claim 1, wherein the lithium transition metal composite oxide further includes Co.

3. The positive electrode for a secondary battery of claim 1 or 2, wherein the lithium transition metal composite oxide further includes Mn.

4. The positive electrode for a secondary battery of any one of claims 1 to 3, wherein the positive electrode mixture layer contains the carbon fiber in an amount of 7 mass% or less.

5. The positive electrode for a secondary battery of any one of claims 1 to 4, wherein a ratio of the average fiber length L of the carbon fiber to a thickness T of the positive electrode mixture layer: L/T is 2 or more and 50 or less.

6. The positive electrode for a secondary battery of any one of claims 1 to 5, wherein the conductive material further includes carbon particles.

7. The positive electrode for a secondary battery of any one of claims 1 to 6, wherein a ratio of the average fiber diameter d of the carbon fiber to an average particle size D of the positive electrode active material: d/D is 0.5 or more and 5 or less.

8. The positive electrode for a secondary battery of any one of claims 1 to 7, wherein the thickness T of the positive electrode mixture layer is 40 µm or less.

9. The positive electrode for a secondary battery of any one of claims 1 to 8, wherein the average particle size D of the positive electrode active material is 15 µm or less.
